# EUROPEAN PATENT SPECIFICATION

(11) **EP 1 834 096 B1**
(45) Date of publication and mention of the grant of the patent: **02.05.2012**
(21) Application number: 05812871.1
(22) Date of filing: 08.12.2005
(51) Int. Cl.: F04B 49/02, B60T 17/02, B60T 8/00, B60G 17/00, B60K 25/00, B60T 10/00, B60T 13/26, B60T 7/16, B60T 7/18, B60G 17/015, F04B 49/00

(54) **A VEHICLE INCLUDING COMPRESSED AIR CONSUMING DEVICES AND A METHOD OF OPERATING THE SAME**
FAHRZEUG MIT DRUCKLUFTVERBRAUCHERVORRICHTUNGEN UND VERFAHREN ZUM BETRIEB DESSELBEN
VEHICULE COMPRENANT DES DISPOSITIFS CONSOMMANT DE L'AIR COMPRIME ET METHODE D'ACTIONNEMENT

(30) Priority: 30.12.2004 SE 0403225
(43) Date of publication of application: 19.09.2007
(73) Proprietor: VOLVO LASTVAGNAR AB, 405 08 Göteborg (SE)
(72) Inventor: SABELSTRÖM, Mats, S-427 37 Billdal (SE); OSCARSSON, Christian, 444 47 Stenungsund (SE)
(74) Representative: Fröhling, Werner Otto
(86) International application number: PCT/SE2005/001861
(87) International publication number: WO 2006/071170

(56) References cited:
- WO-A1-98/07588
- DE-A1- 10 124 236
- DE-A1- 19 600 734
- SE-C2- 522 837
- US-A- 5 983 156
- DATABASE WPI Week 200371, Derwent Publications Ltd., London, GB; Class Q13, AN 2003-750736, XP008113517 & JP 2003 063280 A (FUNAI DENKI KENKYUSHO KK) 05 March 2003

## Description

The present invention relates to a method of operating compressed air systems in vehicles, such as lorries with or without trailers, buses and other heavy vehicles, which include compressed air consuming devices, such as pneumatic braking and suspension systems.

### BACKGROUND OF THE INVENTION

Compressed air systems for such vehicles conventionally comprise a power driven compressor to deliver compressed air to one or more storage tanks from which the air consuming devices are fed. The operation of the compressor is usually controlled by a pressure regulator system maintaining an air pressure within the storage tanks at a rather high level, such as about 10-12 bars, which is considered to be sufficient to meet the need of operating the air consuming devices even in the most demanding situations, such as frequent braking or braking over a prolonged period of time.

The constant use of such high pressure in the storage tank(s) involves several disadvantages. As the compressor's efficiency is lower at higher pressure the energy (fuel) consumption for producing pressurised air will increase. Also the oil carry-over from the lubricating system tends to increase with higher pressure as the temperature inside the compressor rises. The increased temperature also makes the oil carry-over more aggressive to gaskets and sealings in the compressed air system. WO98/07588A1 describes such a state of the art compressor control.

The present invention is based on the finding that the high air pressure conventionally used is necessary only in foreseeable or extreme cases, and that a substantially lower pressure is sufficient during a major part of the time in which the vehicle is in use.

### DISCLOSURE OF THE INVENTION

Thus, the present invention provides a method of operating a vehicle system including compressed air consuming devices, said method comprising operating a power driven compressor so as to deliver compressed air to at least one storage tank and so as to maintain the air pressure in the tank substantially at a predetermined first elevated level and selectively supplying compressed air from the compressed air storage tank to any of said devices in order to operate the same, and the method according to the invention is characterised in controlling the operation of the compressor by position identification means so as to change the pressure of the air in the storage tank to a predetermined second elevated level or substantially different from said first level in response to receiving from the position identification means an indication to the effect that the vehicle is approaching or has arrived at one of a plurality of predetermined positions and/or positions fulfilling predetermined criteria.

Said first air pressure level of the storage tank may, for example, be a minimum value or range between two levels and said second elevated level may be a higher value or range between two levels, the operation of the compressor being controlled so as to change the pressure of the air in the storage tank to said second higher value, when the position identification means identifies positions where an increased consumption of compressed air may be foreseen. Thus, said first pressure level may be a minimum pressure level used under normal operating conditions when no excessive consumption of pressurised air by the air consuming devices is expected or foreseen, and said second pressure level may be a higher pressure level enabling the storage tank to deliver the amount of pressurised air required under special conditions at which frequent and/or prolonged operation of one or more of the air consuming devices is expected. As an example the first pressure level may be in the order of 8 bars and the second pressure level may be around 12 bars.

The air pressure system on a truck is sometimes divided in different circuits with different air pressure requirements. This is the case when different air components require different maximum air pressure levels. For example, the braking system requires approximately 8 bars as a maximum pressure level and the air suspension system requires approximately 12 bars as a maximum level. For an unloaded truck, the air suspension pressure may be only 2 bars. When the air suspension does not require a higher pressure level, e.g. when the truck is driven unloaded on a road, there is no need for the air system of the truck to provide a higher pressure level than required by any of the components, in this case by the braking system.

However, in case the vehicle in question is usually operating under conditions with a relatively high consumption of compressed air and less frequent is used under conditions with a relatively low consumption of compressed air, the said first pressure level may be higher than the said second level. It should also be understood that the position identification means may control the operation of the power driven compressor so as to shift between not only two, but three or more different pressure levels. Thus, the foreseeable consumption of compressed air at the predetermined positions and/or positions fulfilling predetermined criteria may be further graduated.

The compressed air consuming devices comprises a variety of conventional apparatuses and systems. However, the more important as far as consumption of compressed air is concerned, are braking and/or air suspension systems.

The position identification means may be of any suitable kind being able to indicate when the vehicle is approaching or has arrived at one of a plurality of predetermined positions and/or positions where substantially higher or lower consumption of compressed air may be expected. The indication received from the position indication means may, for example, be based on map data and other information about road topology, drive pattern recognition, traffic information from external sources, sensors located on the vehicle and/or special signals generated by external sources. The information may be received by and processed in an electronic processing system, and based on predetermined criteria this processing system may determine when the air pressure level of the storage tank has to be changed.

In case the vehicle, such as a bus, is travelling regularly on a fixed route, said predetermined positions being selected based on experience. As an example, a plurality of plots of the consumption of pressurised air against the position along the route at different times of the day may be stored and used as a reference. Based on such experience and on the actual position along the level of air pressure of the storage tank may be decided.

There are locations or "predetermined positions" on a road or street where it is obvious that an extra amount of pressurised air will be needed. Examples of such locations or positions are a downhill road section, an entrance to a city area from urban areas, a specific parking location used for coupling and/or uncoupling a trailer and a specific location where the suspension of the vehicle is changed, i.e. the body of the vehicle is elevated or lowered by means of pressurised air. Such "predetermined positions" may be defined by wireless position indicators, which may be arranged at suitable place at a certain distance in advance of such predetermined position, and which may be detected by a position detector installed in the vehicle. The wireless position indicator may, for example, be a transponder transceiver and the position detector installed in the vehicle may be a transponding positioning receiver. For a bus, the predetermined positions may be the stops, where a large amount of air is needed for the buss to lower its floor and then to raise it again before continuing the trip.

However, in a presently preferred embodiment the position identification means comprises a global navigation system which may communicate with a receiver installed in the vehicle, and the operation of the compressor may then be controlled based on the position indication received from the navigation system combined with information about the various positions stored, such as map data, information about topology, steep road slopes, long road slopes, foreseeable traffic volume, and/or density of habitation etc.

The consumption of compressed air is highly dependent on the total weight of the vehicle. Therefore, less air is needed when the vehicle, such as a lorry or truck, is empty than when it is fully loaded. Therefore, the vehicle preferably includes weight-determining means, such as weight sensors or air bellow pressure sensors, for indicating whether the vehicle is empty or loaded. Such information about the load situation may be taken into consideration when controlling the operation of the compressor. This means that the pressure of the storage tank may be increased to a higher level at a certain location when the vehicle is fully loaded, but this increase may be cancelled if the vehicle is empty.

According to a further aspect the present invention provides a vehicle comprising a number of compressed air consuming devices, at least one storage tank for compressed air for selectively supplying compressed air to any of said devices so as to operate the same, a power driven compressor for supplying compressed air to the storage tank, pressure control means for controlling the operation of the compressor so as to maintain the air pressure in the tank substantially at a predetermined first elevated level or value, and position identification means for determining the position of the vehicle, and the vehicle according to the invention is characterised in a control device communicating with the position identification means so as to change the pressure of the compressed air in the storage tank to a predetermined second elevated level or value substantially different from said first level or value in response to receiving from the position identification means an indication to the effect that the vehicle is approaching or has arrived at one of a plurality of predetermined positions and/or positions fulfilling predetermined criteria.

### BRIEF DESCRIPTION OF THE FIGURES

The invention will now be further described with reference to the figures, wherein
Fig. 1 is a perspective view of a lorry including compressed air consuming devices,
Fig. 2 is a diagrammatic side view showing a lorry approaching a steep road slope, and
Fig. 3 is a diagrammatic view showing a lorry approaching an industrial area.

### EMBODIMENTS OF THE INVENTION

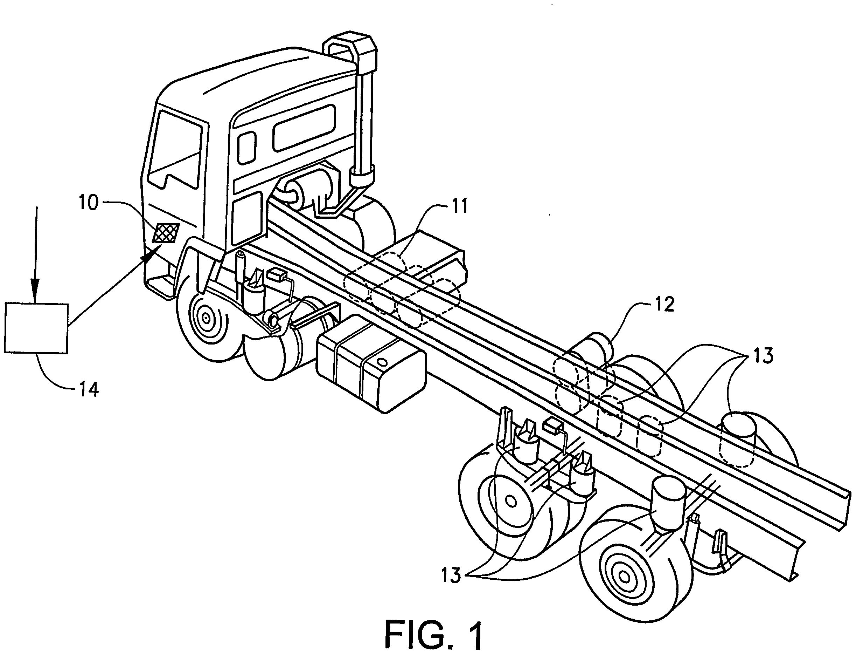

Fig. 1 is a perspective view showing the chassis or frame and the driver's cab of a conventional lorry or truck. The lorry comprises a power driven compressor 10 supplying compressed air to air storage tanks 11 and 12 for compressed air. The storage tanks are supplying pressurised air to a plurality of devices operated by compressed air and comprising an air suspension system, which includes a number of air bellows 13. The compressed air consuming devices also comprise a conventional braking system not specifically illustrated in the drawings.

Conventionally, the operation of the compressor is controlled to maintain a pressure level in the storage tanks 11 and 12 at about 10.5 bars, or pressure range between 9,5 and 10,5 bars, as long as the velocity of the vehicle or lorry is higher than about 30 km/h and to increase such pressure to about 12 bars, or a range between 11 and 12 bars, when the velocity of the vehicle decreases to a value below 30 km/h in order to be prepared for extreme situations where there is a need of large amount of pressurised air. The maintenance of such high pressure level in the storage tanks 11 and 12 requires high energy consumption, increased wear, and an increased risk of gas/aerosol splitting off from lubricating oil in the compressor as it gets very hot, said gas/aerosol may be detrimental for sealings and gaskets.

The pressure level in an air system and thus in the storage tanks are monitored by pressure sensors. These sensors may be electro-mechanical sensors with a built-in hysteresis, or electronic sensors where the control system utilises a hysteresis in order to reduce the number of start/stop-cycles and/or self-oscillation of the compressor. Because of this, the term pressure level will be used meaning also a pressure range around the intended, predefined pressure level. The pressure range will in this case be substantially smaller than the pressure level itself, e.g. a pressure level of 10,5 bars will include a pressure range of approximately 9,5 to 10,5 bars. Depending on the used sensors, the pressure range will be around or below 10% of the maximum pressure level in the system.

In the embodiment of the present invention the operation of the compressor 10 is controlled by an electronic control device 14 which may receive control signals from internal or external sources. According to the invention the compressor 10 is operated so as to maintain the storage tanks 11 and 12 at a relative low pressure level, which is sufficient to deliver the necessary amount of compressed air to the air consuming devices 13 of the suspension and/or braking systems. However, when an actual or potential situation requiring a substantially increased consumption of compressed air is foreseen by the internal or external sources a signal may be transmitted to the control device 14, which may then cause the compressor to increase the air pressure in the storage tanks 11 and 12 to a higher level. As an example, the lower pressure level used when the need for compressed air is estimated to be relatively low may be about 8 bars, and this level may be increased to 10 or 12 bars, when an increased consumption of compressed air is envisaged.

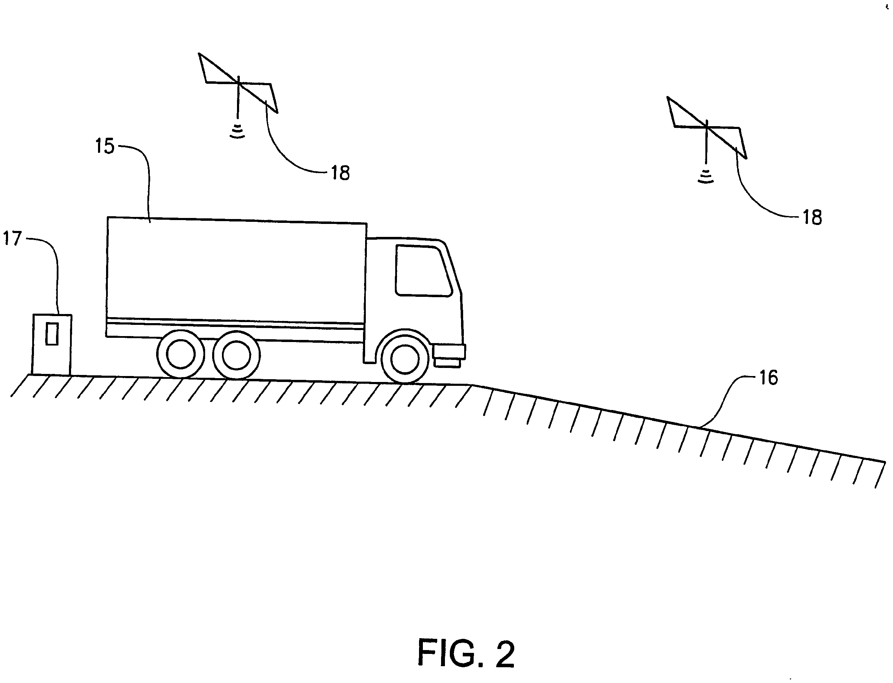

Fig. 2 illustrates a situation where a lorry or another heavy vehicle 15 is approaching a steep road slope 16. In this case wireless position indicators, such as transponder transceivers 17 may be arranged at opposite sides of the road, and the control device 14 may comprise a wireless position detector, such a transponding position receiver. When the position detector of the control device receives a signal from the position indicators 17 indicating that the vehicle is approaching a steep road slope 16 the control device 14 may cause the compressor 10 to increase the pressure in the tanks 11 and 12 to a higher level. Alternatively or additionally the control device 14 may receive position data from satellites 18 of a global navigation system and combined with map information or topology data stored therein the control devices may decide to instruct the compressor 10 to increase the air pressure in the storage tanks.

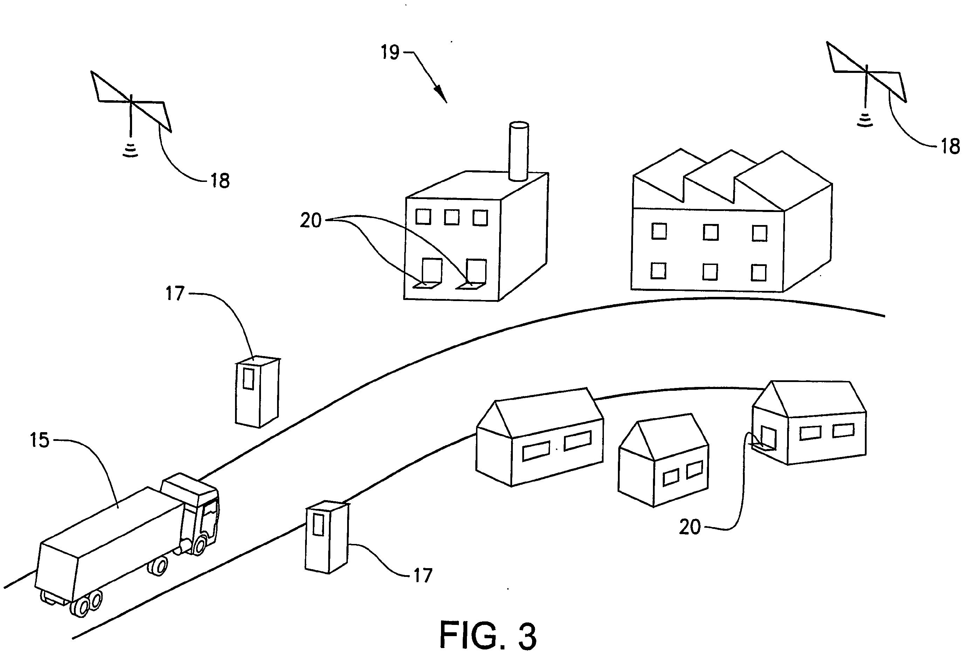

Fig. 3 illustrates a similar situation where the vehicle 15 approaches an industrial area 19. In the industrial area, there are loading docks 20 where the vehicle may load/unload goods. The industrial area may also include a trailer parking where the vehicle may pick up or park a trailer. Also in this case the control device 14 may be notified either by position indicators 17 arranged at one or both sides of the road and/or by satellites 18.

It should be understood that numerous modifications and changes of the embodiments described above may be made within the scope of the appended claims. As an example the control device may receive signals from other kinds of external or internal signal sources than those described, such as video cameras, radar systems etc.

## Claims

1. A method of operating a vehicle system including compressed air consuming devices (13), said method comprising:
- operating a power driven compressor (10) so as to deliver compressed air to at least one storage tank (11, 12) and so as to maintain the air pressure in the tank substantially at a predetermined first elevated level or value and
- selectively supplying compressed air from the compressed air storage tank (11,12) to any of said devices (13) in order to operate the same,
**characterised in**
- controlling the operation of the compressor (10) by position identification means (17, 18) so as to change the pressure of the air in the storage tank (11,12) to a predetermined second elevated level or value substantially different from said first level or value in response to receiving from the position identification means an indication to the effect that the vehicle (15) is approaching or has arrived at one (16,19) of a plurality of predetermined positions and/or positions fulfilling predetermined criteria.

2. A method according to claim 1, wherein said first elevated level is a minimum value and said second elevated level is a higher value, the operation of the compressor being controlled so as to change the pressure of the air in the storage tank to said second higher value, when the position identification means identifies positions where an increased consumption of compressed air may be foreseen.

3. A method according to claim 1 or 2, wherein the compressed air consuming devices comprise braking and/or air suspension systems (13).

4. A method according to any of the claims 1-3, wherein the vehicle system is installed in a vehicle travelling regularly on a fixed route, said predetermined positions being selected based on experience.

5. A method according to any of the claims 1-4, wherein said predetermined positions are defined by wireless position indicators (17) which may be detected by a position detector installed in the vehicle.

6. A method according to any of the claims 1-3, wherein the position identification means comprises a global navigation system (18).

7. A method according to any of the claims 1-6, wherein said predetermined criteria comprises steep road slopes (16), long road slopes, foreseeable traffic volume, and/or density of habitation (19).

8. A vehicle comprising
- a number of compressed air consuming devices (13),
- at least one storage tank 11,12) for compressed air for selectively supplying compressed air to any of said devices so as to operate the same,
- a power driven compressor (10) for supplying compressed air to the storage tank,
- pressure control means (14) for controlling the operation of the compressor so as to maintain the air pressure in the tank substantially at a predetermined first elevated level or value, and
- position identification means (17,18) for determining the position of the vehicle (15),
**characterised in**
- a control device (10) communicating with the position identification means (17,18) so as to change the pressure of the compressed air in the storage tank (11,12) to a predetermined second elevated level or value substantially different from said first level or value in response to receiving from the position identification means an indication to the effect that the vehicle is approaching or has arrived at one (16,19) of a plurality of predetermined positions and/or positions fulfilling predetermined criteria.

9. A vehicle according to claim 8, wherein the control device (14) comprises a wireless receiver for communicating with a global navigation system (18).

10. A vehicle according to claim 8, wherein the control device comprises a wireless position detector, such as a transponding positioning receiver, adapted to communicate with wireless position indicators, such as transponder transceivers (17), positioned at or adjacent to said predetermined positions (16,19).

11. A vehicle according to any of the claims 8-10, further comprising weight determining means, such as weight sensors or air bellow pressure sensors, communicating with the control device so as to inform about the load of the vehicle, the control means being adapted to take such information in consideration when controlling the operation of the compressor.

## Patentansprüche

1. Verfahren zum Betrieb eines Fahrzeugsystems, das Druckluftverbrauchervorrichtungen (13) aufweist, wobei das Verfahren
- den Betrieb eines kraftbetriebenen Kompressors (10) zur Abgabe von Druckluft an wenigstens einen Speichertank (11, 12) und zur Aufrechterhaltung des Luftdrucks in dem Tank im Wesentlichen auf einem vorgegebenen ersten erhöhten Niveau oder Wert und
- das selektive Zuführen von Druckluft von dem Druckluftspeichertank (11, 12) zu irgendeiner der Vorrichtungen (13) zum Betrieb derselben umfasst,
**dadurch gekennzeichnet,**
- **dass** der Betrieb des Kompressors (10) durch eine Positionsidentifikationseinrichtung (17, 18) gesteuert wird, um ansprechend auf den Erhalt einer Anzeige von der Positionsidentifikationseinrichtung, die besagt, dass das Fahrzeug (15) sich einer (16, 19) aus einer Vielzahl von vorbestimmten Positionen und/oder von vorgegebene Kriterien erfüllenden Positionen nähert oder an dieser angekommen ist, den Druck der Luft in dem Speichertank (11, 12) zu einem vorgegebenen zweiten erhöhten Niveau oder Wert zu ändern, das bzw. der sich im Wesentlichen von dem ersten Niveau oder Wert unterscheidet.

2. Verfahren nach Anspruch 1, wobei das erste erhöhte Niveau ein minimaler Wert ist und das zweite erhöhte Niveau ein höherer Wert ist, wobei der Betrieb des Kompressors so gesteuert wird, dass er den Druck der Luft in dem Speichertank zu dem zweiten höheren Wert ändert, wenn die Positionsidentifikationseinrichtung Positionen identifiziert, an denen ein erhöhter Verbrauch an Druckluft vorhergesehen werden kann.

3. Verfahren nach Anspruch 1 oder 2, wobei die Druckluftverbrauchervorrichtungen Brems- und/oder Luftfederungssysteme (13) umfassen.

4. Verfahren nach einem der Ansprüche 1-3, wobei das Fahrzeugsystem in einem Fahrzeug installiert wird, das regelmäßig auf einer festen Route fährt, wobei die vorgegebenen Positionen auf Erfahrung beruhend ausgewählt werden.

5. Verfahren nach einem der Ansprüche 1-4, wobei die vorgegebenen Positionen durch drahtlose Positionsanzeiger (17) definiert werden, die durch einen in dem Fahrzeug installierten Positionsdetektor erfasst werden können.

6. Verfahren nach einem der Ansprüche 1-3, wobei die Positionsidentifikationseinrichtung ein globales Navigationssystem (18) umfasst.

7. Verfahren nach einem der Ansprüche 1-6, wobei die vorgegebenen Kriterien steile Straßengefälle (16), lange Straßengefälle, vorhersehbares Verkehrsvolumen und/oder Wohndichte (19) umfassen.

8. Fahrzeug mit
- einer Anzahl von Druckluftverbrauchervorrichtungen (13),
- wenigstens einem Speichertank (11, 12) für Druckluft zum selektiven Zuführen von Druckluft zu irgendeiner der Vorrichtungen zum Betrieb derselben,
- einem kraftbetriebenen Kompressor (10) zum Zuführen von Druckluft zu dem Speichertank,
- einer Drucksteuerungseinrichtung (14) zum Steuern des Betriebs des Kompressors zur Aufrechterhaltung des Luftdrucks in dem Tank im Wesentlichen auf einem vorgegebenen ersten erhöhten Niveau oder Wert und
- Positionsidentifikationseinrichtungen (17, 18) zum Bestimmen der Position des Fahrzeugs (15),
**gekennzeichnet durch**
- eine Steuerungsvorrichtung (10), die mit den Positionsidentifikationseinrichtungen (17, 18) in Verbindung steht, um ansprechend auf den Erhalt einer Anzeige von der Positionsidentifikationseinrichtung, die besagt, dass das Fahrzeug (15) sich einer (16, 19) aus einer Vielzahl von vorbestimmten Positionen und/oder von vorgegebene Kriterien erfüllenden Positionen nähert oder an dieser angekommen ist, den Druck der Druckluft in dem Speichertank (11, 12) zu einem vorgegebenen zweiten erhöhten Niveau oder Wert zu ändern, das bzw. der sich im Wesentlichen von dem ersten Niveau oder Wert unterscheidet.

9. Fahrzeug nach Anspruch 8, wobei die Steuerungsvorrichtung (14) einen drahtlosen Empfänger zur Kommunikation mit einem globalen Navigationssystem (18) umfasst.

10. Fahrzeug nach Anspruch 8, wobei die Steuerungsvorrichtung einen drahtlosen Positionsdetektor, wie etwa einen transpondierenden Positionsempfänger, umfasst, der für eine Kommunikation mit drahtlosen Positionsanzeigern, wie etwa Transponder-Transceivern (17) ausgelegt ist, die an oder angrenzend an den vorgegebenen Positionen (16, 19) positioniert sind.

11. Fahrzeug nach einem der Ansprüche 8-10, das weiterhin Gewichtsbestimmungseinrichtungen, wie etwa Gewichtssensoren oder Luftbalg-Drucksensoren, umfasst, die zur Informierung über die Last des Fahrzeugs mit der Steuerungsvorrichtung in Verbindung stehen, wobei die Steuerungseinrichtung dazu ausgelegt ist, derartige Informationen bei der Steuerung des Betriebes des Kompressors zu berücksichtigen.

## Revendications

1. Procédé d'actionnement d'un système de véhicule comprenant des dispositifs consommant de l'air comprimé (13), le procédé comprenant les étapes consistant à :
- actionner un compresseur entraîné électriquement (10) de manière à fournir de l'air comprimé à au moins un réservoir de stockage (11, 12) et de manière à maintenir la pression d'air dans le réservoir sensiblement à un premier niveau ou une première valeur prédéterminés et
- fournir sélectivement de l'air comprimé depuis le réservoir de stockage d'air comprimé (11, 12) à l'un quelconque des dispositifs (13) afin d'actionner celui-ci,
**caractérisé en ce qu'**il comporte les étapes consistant à :
- commander le fonctionnement du compresseur (10) par des moyens d'identification de position (17, 18) de manière à changer la pression de l'air dans le réservoir de stockage (11, 12) à un second niveau élevé ou une seconde valeur élevée prédéterminés sensiblement différents du premier niveau ou de la première valeur en réponse à la réception à partir des moyens d'identification de position d'une indication concernant le fait que le véhicule (15) approche d'une position (16, 19), ou y est arrivé, parmi plusieurs positions prédéterminées et/ou positions remplissant des critères prédéterminés.

2. Procédé selon la revendication 1, **caractérisé en ce que** le premier niveau élevé est une valeur minimum et le second niveau élevé est une valeur plus élevée, le fonctionnement du compresseur étant commandé de manière à changer la pression de l'air dans le réservoir de stockage vers la seconde valeur plus élevée, lorsque les moyens d'identification de position identifient des positions où une consommation accrue d'air comprimé peut être prévue.

3. Procédé selon les revendications 1 ou 2, **caractérisé en ce que** les dispositifs consommant de l'air comprimé comprennent des systèmes de freinage et/ou de suspension pneumatique (13).

4. Procédé selon l'une quelconque des revendications 1 à 3, **caractérisé en ce que** le système de véhicule est installé dans un véhicule se déplaçant régulièrement sur une route fixée, les positions prédéterminées étant sélectionnés sur la base de l'expérience.

5. Procédé selon l'une quelconque des revendications 1 à 4, **caractérisé en ce que** les positions prédéterminées sont définies par des indicateurs de position sans fil (17) qui peuvent être détectés par un détecteur de position installé dans le véhicule.

6. Procédé selon l'une quelconque des revendications 1 à 3, **caractérisé en ce que** les moyens d'identification de position comprennent un système mondial de navigation (18).

7. Procédé selon l'une quelconque des revendications 1 à 6, **caractérisé en ce que** les critères prédéterminés comprennent des pentes de route raides (16), des pentes de route longues, un volume de trafic prévisible, et/ou une densité d'habitation (19).

8. Véhicule comprenant:
- plusieurs dispositifs consommant de l'air comprimé (13),
- au moins un réservoir de stockage (11, 12) pour de l'air comprimé pour fournir sélectivement de l'air comprimé à l'un quelconque des dispositifs de manière à faire fonctionner celui-ci,
- un compresseur entraîné électriquement (10) pour fournir de l'air comprimé au réservoir de stockage,
- des moyens de commande de pression (14) pour commander le fonctionnement du compresseur de manière à maintenir la pression d'air dans le réservoir sensiblement à un premier niveau élevé prédéterminé ou une première valeur élevée prédéterminée, et
- des moyens d'identification de position (17, 18) pour déterminer la position du véhicule (15),
**caractérisé en ce que**
- un dispositif de commande (10) communique avec les moyens d'identification de position (17, 18) de manière à changer la pression de l'air comprimé dans le réservoir de stockage (11, 12) jusqu'à un second niveau élevé ou une seconde valeur élevée prédéterminés sensiblement différents du premier niveau ou de la première valeur en réponse à la réception à partir des moyens d'identification de position d'une indication concernant le fait que le véhicule (15) approche d'une position (16, 19), ou y est arrivé, parmi plusieurs positions prédéterminées et/ou positions remplissant des critères prédéterminés.

9. Véhicule selon la revendication 8, **caractérisé en ce que** le dispositif de commande (14) comprend un émetteur-récepteur sans fil destiné à communiquer avec un système de navigation globale (18).

10. Véhicule selon la revendication 8, **caractérisé en ce que** le dispositif de commande comprend un détecteur de position sans fil, tel qu'un émetteur-récepteur de positionnement, adapté pour communiquer avec des indicateurs de position sans fil, tels que des que des émetteurs-récepteurs (17), positionnés dans les positions prédéterminées (16, 19) ou adjacents à celles-ci.

11. Véhicule selon l'une quelconque de revendications 8 à 10, **caractérisé en ce qu'**il comprend de plus des moyens de détermination de poids, tels que des détecteurs de poids ou des détecteurs de pression de soufflets d'air, communiquant avec le dispositif de commande de manière à donner des informations concernant la charge du véhicule, les moyens de commande étant adaptés pour prendre de telles informations en considération lors de la commande du fonctionnement du compresseur.
